(19) Europäisches Patentamt
European Patent Office
Office européen des brevets

(11) **EP 1 532 761 B1**

(12) **EUROPÄISCHE PATENTSCHRIFT**

(45) Veröffentlichungstag und Bekanntmachung des Hinweises auf die Patenterteilung:
**21.12.2011 Patentblatt 2011/51**

(21) Anmeldenummer: **03794859.3**

(22) Anmeldetag: **08.08.2003**

(51) Int Cl.:
***H04L 1/00*** *(2006.01)*

(86) Internationale Anmeldenummer:
**PCT/EP2003/008835**

(87) Internationale Veröffentlichungsnummer:
**WO 2004/025889 (25.03.2004 Gazette 2004/13)**

(54) **VERFAHREN UND STATION ZUR DATEN BERTRAGUNG IN EINEM FUNK-KOM MUNIKATIONSSYSTEM**

METHOD AND STATION FOR TRANSMITTING DATA IN A RADIO COMMUNICATION SYSTEM

PROCEDE ET STATION POUR LA TRANSMISSION DE DONNEES DANS UN SYSTEME DE COMMUNICATION RADIO

(84) Benannte Vertragsstaaten:
**AT BE BG CH CY CZ DE DK EE ES FI FR GB GR HU IE IT LI LU MC NL PT RO SE SI SK TR**

(30) Priorität: **27.08.2002 EP 02019237**

(43) Veröffentlichungstag der Anmeldung:
**25.05.2005 Patentblatt 2005/21**

(73) Patentinhaber: **Nokia Siemens Networks GmbH & Co. KG**
**81541 München (DE)**

(72) Erfinder:
• **HALFMANN, Rüdiger**
**67697 Otterberg (DE)**
• **LI, Hui**
**80937 München (DE)**
• **LOTT, Matthias**
**82061 Neuried (DE)**
• **SCHULZ, Egon**
**80993 München (DE)**

(56) Entgegenhaltungen:
**US-A- 5 448 751        US-A1- 2002 044 614**
**US-A1- 2002 089 947**

**Beschreibung**

Die Erfindung betrifft ein Verfahren zur Datenübertragung in einem Funk-Kommunikationssystem bzw. eine mobile Sende- und/oder Empfangsstation dafür.

In mobilen Kommunikationssystemen, wie zum Beispiel GSM-(Global System for Mobile Communications) oder UMTS- (Universal Mobile Telecommunications System) Systemen, wird die Sendeleistung der Kommunikationspartner bezüglich der Qualität der Verbindung optimiert. Hierzu werden Regelmechanismen eingesetzt, die beispielsweise die Sendeleistung so einstellen, dass eine gewünschte Bitfehlerrate und/oder ein bestimmter Empfangspegel erreicht wird.

In Ad-hoc-Netzen, auch als selbstorganisierende Netze bezeichnet, sind mehrere Netzstationen in der Lage, ohne eine vermittelnde zentrale Einrichtung eine Funkverbindung untereinander aufzubauen. Die Verbindung zwischen zwei Stationen erfolgt dabei entweder direkt oder bei größeren Entfernungen über weitere gleichartige Stationen, die für diese Verbindung Relaisstationen bilden. Diese selbstorganisierenden Netze sind beispielsweise lokale Funknetze (WLANs: Wireless Local Area Networks) gemäß den Standards HiperLAN und IEEE 802.11. Anwendung finden solche Netze nicht nur in den üblichen Internet- und Telematikbereichen sondern auch im Bereich der Inter-Fahrzeugkommunikation, wie z. B. bei Systemen zur Gefahrenwarnungen oder kooperativen Fahrerassistenzsystemen.

Ein besonderer Vorteil von Ad-hoc-Netzen liegt in ihrer großen Mobilität und Flexibilität. An beliebigen Orten können Funkverbindungen zwischen Stationen aufgebaut werden, ohne von festinstallierten Basisstationen oder einer festgelegten Funknetzplanung abhängig zu sein. Verbindungen von einer Station zu einer Zielstation können dabei entweder direkt oder mittels Relaisstationen über eine Vielzahl möglicher Wege realisiert werden. Die große Mobilität der einzelnen, das Ad-hoc-Netz bildenden Stationen impliziert jedoch auch, dass sich für einen Teilnehmer in einem Ad-hoc-Netz Umgebungsbedingungen sehr schnell verändern können. Wird mit einer zu großen Leistung gesendet oder bewegt sich eine fremde auf der gleichen Ressource sendende Station in den Empfangsbereich einer empfangenden Station, kommt es verstärkt zu Interferenzen verschiedener Verbindungen und die Empfangsqualität der einzelnen Verbindungen wird reduziert.

Bei HiperLAN 1 und 2 gibt es Leistungsklassen, welche die Sendeleistungsintensität für eine Station für verschiedene Situationen vorgeben. Bei IEEE 802.11 existieren keine Leistungsklassen. Die mobilen Stationen senden üblicherweise mit der im Standard vorgesehenen maximalen Leistung. Eine Leistungsregelung ist nicht vorgesehen.

Das Dokument US2002/044614 beschreibt Verfahren zur Interferenzreduktion mittels Gleichkanalstörungskategorierung, die eine Interferenzkarte, die Information über eine Mehrzahl möglicher Interferenzquellen enthält, umfassen.

Problematisch bei insbesondere Ad-hoc-Netzen ist eine Situation, bei der zwei Cluster aus jeweils einer sendenden und einer empfangenden Station sich aufeinander zu bewegen. Wenn die jeweilige Auswahl der Ressourcen auf der Funk-Schnittstelle von den beiden Clustern zu einem Zeitpunkt getroffen wird, wenn noch keine Kenntnis über das andere Cluster besteht, so ist es möglich, dass die sendenden Stationen beider Cluster die identisch gleiche Ressource für ihre Übertragungen wählen. Insbesondere bei sich schnell aufeinander zu bewegenden Clustern besteht dann die Gefahr, dass die empfangende Station eines Clusters außer Signalen ihrer eigenen zugeordneten sendenden Station auch Signale der anderen sendenden Station des anderen Clusters empfängt. In diesem Fall findet eine Interferenz statt, welche im ungünstigen Fall eine Rekonstruktion des gewünschten Empfangssignals verhindert.

Gemäß dem IEEE 802.11-Standard kann der Einfluss der Mobilität auf die Übertragungseffizienz durch die Übertragungsleis-tungssteuerung und die Anpassung der Fehlerkorrekturfähigkeit kompensiert werden. Nachteilhafterweise sind die maximal zulässige Übertragungsleistung und die Möglichkeiten der Anpassung der Fehlerkorrekturfähigkeit beschränkt und daher für die Kompensation bei einer hohen Mobilität nicht ausreichend geeignet.

Außerdem kann die Verwendung von Leistungssteuerungsmechanismen die Systeminstabilität innerhalb mobiler Ad-hoc-Netze sogar erhöhen. Sobald sich der Abstand zwischen den beiden Clustern verringert, würden die beiden sendenden Stationen ihre eigene Übertragungsleistung erhöhen, um erfasste Interferenz durch die sendende Station des anderen Clusters zu kompensieren. Folglich messen die empfangenden Stationen eine zunehmende Interferenz und fordern ihre eigene sendende Station auf, deren Übertragungsleistung weiter zu erhöhen. Nachteilhafterweise sind derzeit verwendete Leistungssteuerungsmechanismen für die Kompensation nicht leistungsfähig genug.

Der Erfindung liegt daher die Aufgabe zugrunde, ein vorteilhaftes Verfahren bzw. Sende- und/oder Empfangsstationen in Funk-Kommunikationsnetzen, insbesondere in Ad-hoc-Netzen anzugeben, welche Kollisionen auf dem Funkmedium durch sich bewegende Stationen oder bewegende Störquellen reduzieren.

Diese Aufgabe wird durch das Verfahren und die Sende- und/oder Empfangsstation für ein Funk-Kommunikationssystem gemäß den unabhängigen Patentansprüchen gelöst. Vorteilhafte Weiterbildungen der Erfindung sind den abhängigen Patentansprüchen entnehmbar.

Besonders vorteilhaft ist diesbezüglich ein Verfahren zum Übertragen einer Datenfolge in einem Kommunikationssystem, bei dem eine erste sendende Station ein Sendesignal zum Übertragen der Datenfolge an eine erste empfangende Station über eine Funk-Schnittstelle überträgt, vor der Übertragung durch zumindest die erste sendende Station und/oder die erste empfangende Station die Funk-Schnittstelle hinsichtlich eines Störsignals einer Störquelle überprüft und die Übertragung nur bei einer ausreichend ungestörten Funk-Schnittstelle zu einem Zeitpunkt begonnen wird, wobei die Störquelle sich relativ zur ersten empfangenden Station und dieser annähernd bewegt, und die Übertragung außerdem nur in dem Fall begonnen wird, wenn in der für die Übertragung der Datenfolge erforderlichen Zeitdauer eine Annäherung der Störquelle nur bis zu einem die Übertragung durch das Störsignal nicht störenden Maß möglich ist.

Insbesondere zum Durchführen eines solchen Verfahrens ist ein Kommunikationssystem mit mobilen Sende- und/oder Empfangsstationen und/oder mobilen Störquellen, insbesondere einer zweiten sendenden Station als mobiler Störquelle, vorteilhaft, wenn das Kommunikationssystem aufweist, eine Geschwindigkeits-Bestimmungseinrichtung zum Bestimmen von Geschwindigkeiten und/oder Relativgeschwindigkeiten der Stationen und/oder Störquelle zueinander, eine Trägerzustandsbestimmungseinrichtung, insbesondere Trägerabtasteinrichtung zum Bestimmen oder Ermitteln eines ungestörten Trägers für eine beabsichtigte Übertragung einer Datenfolge und eine Schwellen-Bestimmungseinrichtung zum Bestimmen eines Schwellenwertes für eine minimale Differenz zwischen einem gewünschten Empfangssignal und einem Störsignal und/oder eine Übertragungsdauer-Einstelleinrichtung zum Vorgeben einer maximal möglichen Übertragungsdauer für eine Übertragung einer Datenfolge.

Vorteilhaft ist insbesondere, eine erwartete Änderung, insbesondere Zunahme der Intensität des Störsignals bei der ersten empfangenden Station anhand der tatsächlichen und/oder maximal möglichen Relativgeschwindigkeit der Störquelle und der ersten empfangenden Station zu einander zu bestimmen oder abzuschätzen. Mit Hilfe einer solchen Bestimmung oder Abschätzung von Relativgeschwindigkeiten kann bei einer bekannten Störquelle oder der Annahme einer Störquelle mit bekannter Störintensität und maximaler möglicher Relativgeschwindigkeit eine Zeitdauer bestimmt werden, innerhalb welcher keine Störquelle mit einem zu stark störenden Signal in den Decodierbereich der ersten empfangenden Station eindringen kann.

Vorteilhaft ist insbesondere, eine erwartete Änderung, insbesondere Abnahme der Intensität des Sendesignals bei der ersten empfangenden Station abhängig von einer tatsächlichen und/oder maximal möglichen Relativgeschwindigkeit der ersten sendenden Station und der ersten empfangenden Station zueinander zu bestimmen oder abzuschätzen. Eine solche Relativgeschwindigkeit zwischen der ersten sendenden Station und der ersten empfangenden Station ermöglicht eine Abschätzung, ob in der ersten empfangenden Station eine Veränderung der Empfangsintensität des gewünschten Empfangssignals zu erwarten ist, was letztendlich eine höhere bzw. geringere Intensität eines zu erwartenden oder möglicherweise zu erwartenden Störsignals ermöglicht.

Für die Stationen und Störquellen innerhalb eines Erfassungsbereichs der ersten empfangenden Station ist es vorteilhaft, deren jeweils bestimmbaren oder übermittelten Geschwindigkeiten zu verwenden, wobei eine übliche Störquelle innerhalb des Erfassungsbereichs durch insbesondere die erste empfangende Station als Störquelle ermittelbar ist. Bestimmbare Geschwindigkeiten sind dabei Geschwindigkeiten der Stationen selber oder anderer Stationen und Störquellen, welche aufgrund der Stationseigenschaften insbesondere der ersten empfangenden Station selber bestimmt werden können. Übermittelte Geschwindigkeiten sind Geschwindigkeitsinformationen, welche der ersten sendenden Station und/oder der ersten empfangenden Station von einer anderen Station oder möglicherweise ortsfesten Einrichtungen sowie möglicherweise der Störquelle selber übermittelt werden. Dies ist insbesondere für den Fall vorteilhaft, dass die erste empfangende Station oder die erste sendende Station entweder nicht selber in der Lage ist, derartige Geschwindigkeiten zu bestimmen oder aufgrund der Empfangsbedingungen noch nicht in der Lage sind eine entferntere Störquelle selber zu erfassen und zu bestimmen.

Für die Stationen und Störquellen innerhalb eines Erfassungsbereichs der ersten empfangenden Station ohne eine diesbezügliche Geschwindigkeitsinformation und/oder für die Stationen und Störquellen außerhalb eines Erfassungsbereichs der ersten empfangenden Station ohne eine diesbezügliche Geschwindigkeitsinformation ist vorteilhafterweise eine üblicherweise maximal mögliche oder maximal sinnvolle Geschwindigkeit zu verwenden. Dadurch kann für den Fall, dass keine Informationen über Störquellen oder andere Stationen vorliegen, ein üblicher Wert oder bei besonders hochqualitativ zu erhaltenden Empfangsbedingungen ein schlechtest möglicher Wert für die Geschwindigkeiten der Stationen und/oder möglichen Störquellen einzusetzen, so dass auch ohne entsprechende Bestimmungsmöglichkeiten oder Empfangsmöglichkeiten zur Ermittlung von Geschwindigkeiten und/oder Störsignalen die Möglichkeit besteht, das Verfahren anzuwenden.

Mit der erwarteten Änderung der Intensität des Störsignals und/oder der erwarteten Änderung der Intensität des Sendesignals kann vorteilhafterweise die maximal verfügbare Zeitdauer für die nicht gestörte Übertragung der Datenfolge bestimmt werden.

Ein Schwellenwert für eine minimale erforderliche Differenz der Intensität des Sendesignals zu der Intensität des Störsignals kann vorteilhafterweise als das Maß für ein das Sendesignal nicht störendes Signal bestimmt und/oder abgeschätzt werden.

Ein Decodierbereich um die erste empfangende Station kann vorteilhafterweise festgelegt bzw. bestimmt werden, wobei das Störsignal der innerhalb des Decodierbereichs befindlichen Störquelle unzulässig stören würde.

Zwischen der ersten empfangenden Station und der ersten sendenden Station können vorteilhafterweise stationsbezogene und/oder stationsermittelte Parameter und/oder auf Übertragungsbedingungen bezogene Parameter und/oder Parameter , insbesondere ein Schwellenwert und/oder eine maximal mögliche Übertragungsdauer ausgetauscht werden. Stationsbezogene Parameter sind beispielsweise die eigene Geschwindigkeit oder Sendeleistung einer Station bzw. die bei einer empfangenden Station empfangende Intensität des gewünschten Empfangssignals bzw. die Intensität eines empfangenden Störsignals. Diese Parameter können entweder anhand der Stationen selber bestimmt oder ermittelt werden, es ist aber auch möglich, dass diese Stationen von anderen Stationen oder Einrichtungen im Umfeld ermittelt und über beispielsweise eine Funkschnittstelle übertragen werden. Als schnittstellenbedingte Parameter sind insbesondere Parameter zu verstehen, die aufgrund verschiedener Geschwindigkeitsunterschiede zwischen den einzelnen Stationen und/oder Störquellen zueinander variieren. Insbesondere dieser Parameter hängt von einer Vielzahl weiterer relevanter Parameter ab, welche funksystemspezifisch und umgebungsspezifisch beeinflusst werden.

Vorteilhafterweise ist diese Verfahrensweise bei Ad-hoc-Kommunikationssystemen, insbesondere gemäß dem Standard IEEE 802.11 einsetzbar. Dies gilt sowohl für die adaptive Trägerabtastung als auch die Burst-Betriebsart-Anpassung bzw. die Kombination beider Verfahrensweisen. Unter einer Burst-Betriebsart-Anpassung wird die Anpassung der Sendebedingungen für eine Datenfolge verstanden, also insbesondere Art und Aufbau eines Datenübertragungsrahmens, die Anzahl von in einer Abfolge zu übertragenden Bit oder die Dauer eines Übertragungsblocks. Allgemein kann die Verfahrensweise darüber hinaus auf Kommunikationssysteme angewendet werden, welche Mediumzugriffs-Steuerschemata verwenden, die auf einer Trägerabtastung beruhen und bei denen die Mobilität der sendenden und/oder empfangenden Stationen zu berücksichtigen ist.

Dazu zählt unter anderem auch das Projekt "FleetNet" des deutschen BMBF (Bundesministerium für Bildung und Forschung) für eine Kommunikation von Fahrzeug zu Fahrzeug, wobei diese Schemata auf modifizierten Architekturen der Protokolle zu UTRA TDD HCR/LCR und TSM beruhen (UTRAN: UMTS Terrestrial Radio Access Network TDD: Time Division Duplex, HCR/LCR: High/Low Chip Rate TSM: TD-SCDMA System for Mobile; TD-SCDMA: Time Division - Synchronous Code Division Multiple Access).

Ein Ausführungsbeispiel wird nachfolgend anhand der Zeichnungen näher erläutert. Es zeigen:

FIG 1 zwei sich aufeinander zu bewegende Cluster mit jeweils zumindest einer sendenden und zumindest einer empfangenden Station in einem Ad-hoc-Netz,

FIG 2 ein Schema zur Verdeutlichung der Übertragungen und möglicher Kollisionen in einer solchen Situation bei Berücksichtigung des Zeitfortschritts,

FIG 3 ein Diagramm zur Veranschaulichung der in einer empfangenden Station empfangenen Signalstärken der Signale, welche von den beiden sendenden Stationen ausgesendet wurden,

FIG 4 ein Schema zur Verdeutlichung einer Verfahrensweise zur Kollisionsvermeidung unter Berücksichtigung einer Trägerabtastung und

FIG 5 ein Schema zur Veranschaulichung einer Verfahrensweise zur Kollisionsvermeidung unter Berücksichtigung einer Burst-Betriebsart-Anpassung.

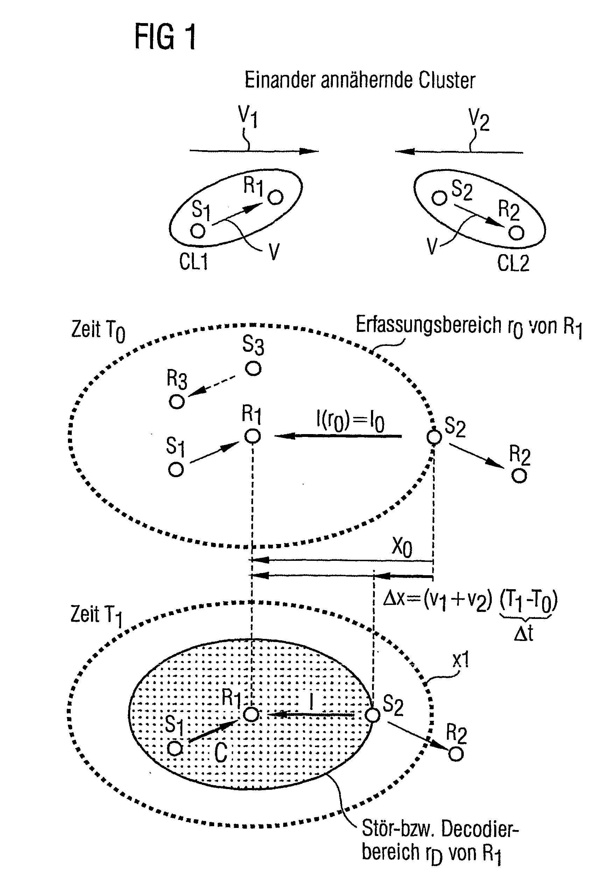

Wie aus FIG 1 ersichtlich, bilden sich in sogenannten Ad-hoc-Funknetzen als einem Beispiel für ein Funk-Kommunikationssystem Cluster CL1, CL2 aus, die jeweils aus miteinander über Funkschnittstellen V kommunizierenden Stationen S1, R1, S3, R3 bzw. S2, R2 bestehen. Zur Vereinfachung der nachfolgenden Beschreibung wird dabei jeweils eine Station S1, S2 des ersten bzw. zweiten Clusters CL1, CL2 als sendende Station S1 bzw. S2 betrachtet und eine weitere Station R1, R2 des ersten bzw. des zweiten Clusters CL1, CL2 als empfangende Station R1, R2 betrachtet. Natürlich ist auch eine Übertragung in umgekehrter Richtung möglich und üblich. Bei der dargestellten Übertragung wird davon ausgegangen, dass jeweils von der sendenden Station S1, S2 Daten mit Signalisierungs- und/oder Informationsgehalt an die entsprechende empfangende Station R1 bzw. R2 gesendet werden. Vor der Übertragung von solchen Daten werden üblicherweise zwischen den entsprechenden sendenden und empfangenden Stationen S1, R1 bzw. S2, R2 Signalisierungsdaten (RTS, CTS) ausgetauscht, um die Sendeparameter und Belegung der verfügbaren Ressourcen aufeinander abzustimmen.

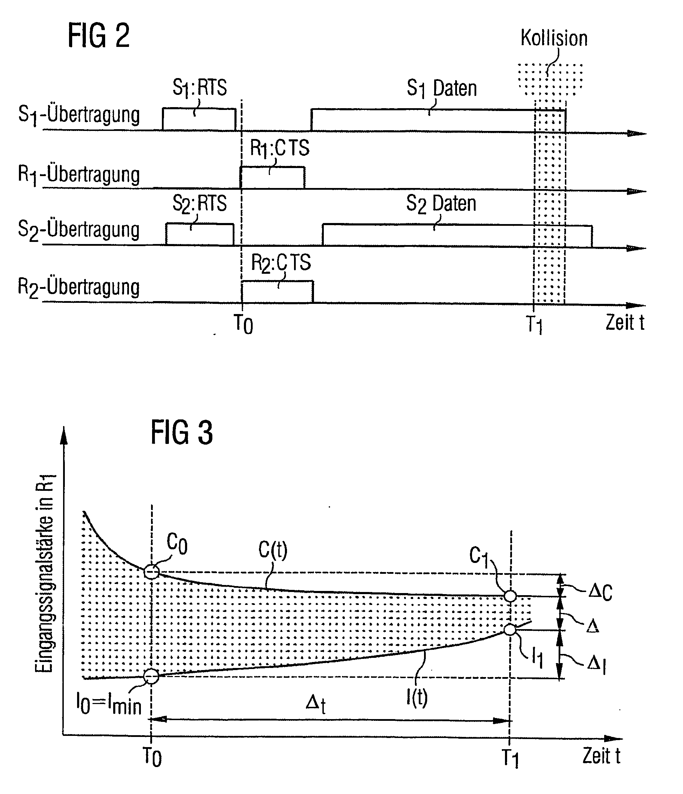

Wie dies aus FIG 2 ersichtlich ist, findet insbesondere von der sendenden Station S1, welche Daten an die empfangende Station R1 übertragen möchte, eine Signalisierung RTS (Ready To Send) statt, um die Bereitschaft zu signalisieren, Daten zu der empfangenden Station R1 senden zu wollen. Die empfangende Station R1, welche wahlweise die Zielstation oder eine Relaisstation auf der Datenübertragungsstrecke zu einer entfernteren Zielstation sein kann, sendet bei Bereitschaft zum Datenempfang und nach Abstimmung der erforderlichen Parameter eine Antwortsignalisierung CTS (Clear To Send), mit der die Bereitschaft signalisiert wird, die Daten bzw. Datenfolge zu empfangen. Nachfolgend erfolgt dann die Übertragung der eigentlichen Daten von der sendenden Station S1 zur empfangenden Station R1. Wie aus FIG 2 ersichtlich, findet ein ähnlicher Ablauf auch für die Übertragung von Daten von der sendenden Station S2 des zweiten Clusters CL2 zu der empfangenden Station R2 des zweiten Clusters CL2 statt.

Wie aus FIG 1 ersichtlich, wird für die nachfolgenden Betrachtungen davon ausgegangen, dass sich die beiden Cluster CL1 und CL2 mit einer Richtungskomponente mit einer RelativGeschwindigkeit

$$\Delta v = v_1 + v_2 \qquad (1)$$

aufeinander zu bewegen, wobei sich die Relativ-Geschwindigkeit $\Delta v$ aus den beiden Einzelgeschwindigkeiten v1, v2 der beiden Cluster CL1 bzw. CL2 zusammensetzt. Während nachfolgend die Situation von zwei sich aufeinander zu bewegenden Clustern CL1, CL2 betrachtet wird, gelten diese Überlegungen natürlich für jegliche Situation, in der sich eine sendende Station S2 in den Empfangsbereich einer fremden empfangenden Station R1 bewegt.

Für einen ersten Zeitpunkt $T_0$ wird angenommen, dass eine erste Gruppe aus der ersten sendenden Station S1 und der ersten empfangenden Station R1 eine Kommunikation über die Funkschnittstelle V aufbaut. Wie dargestellt, sind dabei weitere Stationen R3, S3 nicht kritisch, wenn sie trotz Sendeaktivität im Empfangsbereich $r_R$ der ersten empfangenden Station R1 auf einer anderen Ressource, z.B. einer anderen Frequenz, senden. Wie dies aus den beiden ersten Zeilen von FIG 2 ersichtlich ist, wird eine Kommunikation für die Übertragung von Daten durch einen einleitenden Austausch von Signalisierungsdaten bzw. Signalisierungen RTS, CTS eingeleitet.

Zu diesem ersten Zeitpunkt $T_0$ soll sich die zweite sendende Station S2 des zweiten Clusters CL2 noch außerhalb des Empfangs- bzw. Erfassungsbereiches $r_R$ der ersten empfangenden Station R1 oder an dessen Grenze befinden. Die zweite sendende Station S2 baut eine Kommunikationsverbindung zu der zweiten empfangenden Station R2 auf, wie dies aus den beiden unteren Zeilen von FIG 2 zu entnehmen ist. Auch für diese Kommunikation werden einleitend Signalisierungen RTS, CTS ausgetauscht, bevor die Übertragung von den eigentlichen Nutzdaten eingeleitet wird. Dadurch, dass die zweite sendende Station S2 keine Kenntnis von der Kommunikation zwischen der ersten sendenden Station S1 und der ersten empfangenden Station R1 hat, soll nachfolgend davon ausgegangen werden, dass die zweite sendende Station S2 für ihre Kommunikation mit der zweiten empfangenden Station R2 auf die gleiche Ressource zugreift, wie sie von den beiden anderen Stationen S1, R1 verwendet wird.

Durch die Bewegung der zweiten sendenden Station S2 in Richtung der ersten empfangenden Station R1 gelangt die zweite sendende Station S2 zum Zeitpunkt T0 bzw. unmittelbar darauf in den Erfassungsbereich $r_R$ der ersten empfangenden Station R1. Der Abstand $x_0$ zwischen der zweiten sendenden Station S2 und der ersten empfangenden Station R1 entspricht zu diesem Zeitpunkt T0 dem maximalen Empfangsbereich $r_R$ der ersten empfangenden Station R1. Zu diesem Zeitpunkt T0 empfängt die erste empfangende Station, wie dies auch aus FIG 3 ersichtlich ist, ein starkes Empfangssignal C0 von der ersten sendenden Station S1 und ein zweites Empfangssignal I0 als zunehmend interferierendes Signal I(t) von der zweiten sendenden Station S2. Abgesehen von möglichen Schwankungen der Sendeleistung oder verstärkenden und/oder dämpfenden Umgebungsbedingungen hängen das erste Empfangssignal C(t) und das zweite Empfangssignal I(t) insbesondere von der Entfernung zu der ersten sendenden Station S1 bzw. zu der zweiten sendenden Station S2 ab.

Nachfolgend wird von der problematischen Situation ausgegangen, dass während der Einleitung der beiden Sendevorgänge zwischen der ersten sendenden Station S1 und der ersten empfangenden Station R1 einerseits und andererseits der zweiten sendenden Station S2 und der zweiten empfangenden Station R2 keine Kenntnis voneinander bestanden hat und daher gleiche Ressourcen gewählt wurden. Weiter wird davon ausgegangen, dass für die Übertragung der Daten jeweils eine bestimmte Zeitdauer erforderlich ist, wobei sich die zweite sendende Station S2 der ersten empfangenden Station R1 so schnell nähert, dass vor dem Abschluss der Übertragung der Daten auf den beiden Verbindungen in der ersten empfangenden Station eine Kollision stattfindet. Zu dem entsprechenden, späteren Zeitpunkt T1 empfängt die erste empfangende Station R1 sowohl Daten von der ersten sendenden Station S1, welche für sie bestimmt sind, als auch Daten von der zweiten sendenden Station S2, welche eigentlich für die zweite empfangende Station R2 bestimmt sind. Dabei ist die Intensität C1 des Empfangssignals der Daten von der ersten sendenden Station S1 in der ersten empfangenden Station R1 nur noch um einen Intensitätsbetrag größer als die Interferenz-Empfangsintensität I1 der Daten von der zweiten sendenden Station S2. In dem Moment, in dem die Differenzintensität

$$\Delta = \Delta C - \Delta I \qquad (2)$$

unter einen derart definierten Schwellenwert $\Delta$ fällt, wird die Interferenz so groß, dass in der ersten empfangenden Station R1 eine Auflösung und Rekonstruierung der von der ersten sendenden Station S1 empfangenden Daten nicht mehr oder nicht mehr mit ausreichender Sicherheit möglich ist. Zu diesem späteren Zeitpunkt T1 ist die zweite sendende Station S2 mit Blick auf den Abstand xl in den Decodierbereich $r_D$ der ersten empfangenden Station R1 eingedrungen. Eine maximale erforderliche Bitfehlerrate BER (Bit Error Rate) für die Verbindung zwischen der ersten sendenden Station S1 und der ersten empfangenden Station R1 kann in diesem Moment nicht mehr garantiert werden.

Für die nachfolgenden Betrachtungen werden somit ein Erfassungsbereich $r_R$ und ein Decodierbereich $r_D$ betrachtet. Der Erfassungsbereich $r_R$ ist dabei der Bereich um eine empfangende Station R1 herum, in welcher diese eine Signalstärke des Störsignals I(t) unterhalb einer vorbestimmten Störsignal-Schwelle $I_{min}$ empfängt, welche eine Auflösung nicht ermöglicht, so dass der Funkkanal aus Sicht der ersten empfangenden Station R1 als unbenutzt bzw. "Idle" bestimmt wird. Die Signalintensität $I_{min}$ kennzeichnet den maximalen Bereich $r_R$ für die Erfassung einer möglicherweise störenden Station S2.

Der Decodierbereich ist dahingegen durch den minimalen Abstand zwischen einer empfangenden Station R1 und einer diese störenden Station S2 bestimmt, wobei bei einer Distanz größer diesem Decodierabstand $r_D$ ein Verhältnis einer empfangenden Signalstärke $C_0$ auf dem Träger von einer zugeordneten sendenden Station S1 zu einem störenden Interferenzsignal $I_0$ einer interferierenden zweiten Station S2 noch zumindest einen Schwellenwert $\Delta$ aufweist, bei welchem eine Detektion des Empfangssignals ermöglicht wird. Dabei ist der Schwellenwert $\Delta$ abgesehen von der Distanz $r_0$ bzw. r(t) der störenden sendenden Station S2 auch von einer Vielzahl weiterer Parameter abhängig, insbesondere dem Abstand der zugeordneten sendenden Station S1, dem verwendeten Modulationsverfahren, dem verwendeten Codierschema und der erforderlichen Bitfehlerrate.

Zu berücksichtigen ist auch der Abstand der ersten sendenden Station S1 zu der ersten empfangenden Station R1, welcher sich ebenfalls auf den tatsächlichen Schwellenwert $\Delta$ auswirkt. Wie aus FIG 3 ersichtlich, wird beim gewählten Ausführungsbeispiel der Abstand zwischen diesen beiden Stationen S1 und R1 mit der Zeit t über das betrachtete Zeitintervall $\Delta t$ zwischen dem ersten und dem zweiten Zeitpunkt T0 bzw. T1 größer, z.B. dadurch, dass sich die erste sendende Station S1 nicht so schnell wie die erste empfangende Station R1 in Richtung der zweiten sendenden Station S2 bewegt. Dadurch wird der kritische Schwellenwert $\Delta$ entsprechend früher erreicht.

Bei den vorstehenden Betrachtungen wurde davon ausgegangen, dass zu Zeitpunkten t2, t1 < T0 von den beiden sendenden Stationen S1 und S2 die Signalintensität auf der gewünschten Trägerfrequenz f0 gemessen und der Funkkanal als unbelegt erfasst wurde, da die Entfernung zwischen den beiden beteiligten Stationen der beiden Cluster CL1, CL2 zu den Zeitpunkten t1 bzw. t2 größer als der Erfassungsbereich von diesen war. Daher senden die beiden sendenden Stationen S1 und S2 zu den Zeitpunkten t1 bzw. t2 eine Signalisierung RTS zum Aufbauen einer Funkverbindung zu den zugeordneten empfangenden Stationen R1 bzw. R2. Zugleich wird eine Reservierung der Ressource auf der Funk-Schnittstelle V vorgenommen, so dass andere Stationen S3, R3 in dem Erfassungsbereich für eine vorgegebene nachfolgende Zeit nicht auf diese Ressource zugreifen können. Dadurch wird für die nachfolgende Datenübertragung eine erforderliche Zeit reserviert.

Durch die Decodierung der Signalisierung RTS wird somit einer gewünschten Ziel- oder Relaisstation als empfangener Station R1, R3, S3 bzw. R2 mitgeteilt, dass eine Verbindung zwischen den beiden gewünschten Stationen S1 und R1 bzw. S2 und R2 aufgebaut werden soll.

Nach dem Empfang der Signalisierung RTS antwortet zum Zeitpunkt T0 die gewünschte Ziel- bzw. Relaisstation als empfangende Station R1 auf die erste sendende Station S1 bzw. in dem anderen Cluster CL2 die zweite empfangende Station R2 auf die zweite sendende Station S2 mit einer entsprechenden Antwortsignalisierung CTS, um die Empfangsbereitschaft zu signalisieren. Vor der Antwortsignalisierung haben üblicherweise auch die empfangenden Stationen R1 bzw. R2 mit einer Überprüfung der Ressource festgestellt, dass diese Ressource verfügbar ist. Da die Stationen der verschiedenen Cluster CL1, CL2 noch jeweils außerhalb des Erfassungsbereiches $r_R$ der Stationen des anderen Clusters CL2, CL1 sind, wird für die nachfolgende Überlegung von der kritischen Wahl der gleichen Ressource für die Datenübertragung ausgegangen.

Wie vorstehend ausgeführt, wird für die nachfolgenden Überlegungen davon ausgegangen, dass sich die beiden Cluster CL1, CL2 so schnell aufeinander zu bewegen, dass eine störende Interferenz zum zweiten Zeitpunkt T1 stattfindet, welche eine Kollision in der ersten empfangenden Station R1 verursacht.

Zu diesem zweiten Zeitpunkt T1 empfängt die erste empfangende Station R1 Daten von beiden sendenden Stationen S1, S2 und die Interferenz wird zu groß, da die Interferenzintensität $\Delta$ bzw. der minimale Decodierabstand $r_D$ unterschritten werden. Ab diesen Zeitpunkt nimmt somit die Wahrscheinlichkeit erheblich zu, dass eine Decodierung der gewünschten empfangenen Daten von der ersten sendenden Station S1 mit zunehmender Wahrscheinlichkeit nicht mehr möglich ist.

In gleicher Art und Weise wird übrigens auch die zweite empfangende Station R2 durch empfangene Daten von der ersten sendenden Station S1 gestört, sofern sich die erste sendende Station S1 in gleichem Maße der zweiten empfangenden Station R2 nähert, wie dies zwischen der zweiten sendenden Station S2 und der ersten empfangenden Station R1 der Fall ist.

Zur Umsetzung eines besonders bevorzugten Verfahrens werden nachfolgend Anforderungen für mobile und nicht mobile Ad-hoc-Netze gesetzt. Unter anderem soll das Verhältnis der kollidierenden Signale, das sogenannte Signal-zu-Interferenz-Verhältnis zu dem zweiten Zeitpunkt T1 = T0 + $\Delta$t nicht geringer als ein minimaler Wert bzw. der Schwellenwert $\Delta$ sein, welcher insbesondere von der erforderlichen Bitfehlerrate (BER) und der verwendeten Codierung bzw. dem Modulationsschema abhängt. Unter Berücksichtung der in der ersten empfangenden Station empfangenden Signalintensität $C_1 = C(T_1)$ des von der ersten sendenden Station R1 empfangenen Signals C(t) und der Signalintensität $I_1 = I(T_1)$ des von der zweiten sendenden Station $S_2$ empfangenden Signals I(t) ergibt sich somit eine Differenz, die größer oder gleich dem Schwellenwert $\Delta$ sein soll:

$$C\big(T_1\big) - I\big(T_1\big) \geq \Delta \, . \qquad (3)$$

Betrachtet wird somit die Differenz zwischen einem gewünschten Trägersignal C(t) und einem unerwünschten interferierenden Interferenzsignal I(t). Für insbesondere mobile Ad-Hoc-Netze besteht die Anforderung, dass aufgrund der zeitlichen Varianz mobiler Ad-Hoc-Netze die Einschätzung bzw. das Überprüfen der Netzeigenschaften durch die einzelnen Stationen zu dem ersten Zeitpunkt $T_0$ nicht ausreichend sein kann, um zu garantieren, dass eine Datenübertragung zu dem zweiten Zeitpunkt $T_1$ nach der Zeitdifferenz $\Delta$t ausreichend ist. Je größer die Zeitdifferenz $\Delta$t ist, desto größer ist die Wahrscheinlichkeit, dass sich schnell aufeinander zu bewegende Stationen R1, S2 gegenseitig stören, da sich deren Erfassungsbereiche $r_R$ bzw. Decodierbereiche $r_D$ überlagern.

Für mobile Netze, insbesondere mobile Ad-Hoc-Netze soll somit die maximale Interferenz $\Delta$I möglicher auftauchender Störquellen S2 und/oder der Verlust $\Delta$C der empfangenen Trägersignalstärke C(t) bei einer empfangenen ersten Station R1 für die gesamte Übertragungsdauer $\Delta$t zwischen den beiden Messzeitpunkten $T_0$ bzw. $T_1$ berücksichtigt werden.

Mit Blick auf insbesondere FIG 3 ergibt sich, dass der gemessene Trägersignalpegel zum ersten Zeitpunkt $T_0$ die nachfolgende Gleichung erfüllen soll, um eine erfolgreiche Datenübertragung bis zu dem zweiten Zeitpunkt $T_1$ zu garantieren.

$$C_0 \geq I_0 + \Delta I + \Delta C + \Delta \, . \qquad (4)$$

Dabei ist der mögliche Verlust aufgrund von Interferenzeffekten eine Funktion der Übertragungsdauer bzw. des Zeitintervalls $\Delta$t, der Geschwindigkeit $v_{r1}$, $v_{max}$ der sich im System bewegenden Stationen R1, S1, S2 und des Erfassungsbereiches $r_{min}$ bzw. $r_R$. Der Erfassungsbereich $r_R$ lässt sich letztendlich auch durch die verwendete Übertragungsleistung $P_{max}$ der störenden zweiten sendenden Station S2 und der Erfassungsschwelle des Träger $I_{min}$ in der ersten empfangenden Station $R_1$ ausdrücken:

$$\Delta I = \Delta I\big(transmission\_duration : \Delta t, velocity : v_{R1}, v_{max}, \det ection\_range : r_{min}\big)$$

$$= \Delta I\left(\begin{array}{l} transmission\_duration : \Delta t, velocity : v_{R1}, v_{max}, \\ transmission\_power : P_{max}, threshold\_of\_carrier\_\det ection : I_{min} \end{array}\right) \cdot (5)$$

Die Verluste des gewünschten Trägersignals C(t) lassen sich als eine Funktion der Übertragungsdauer, also des Zeitintervalls $\Delta$t, der Geschwindigkeit der beteiligten Stationen $v_{r1}$, $v_{s1}$ sowie des Abstandes $r_0$ zwischen der ersten empfangenden Station $R_1$ und der störenden zweiten sendenden Station S2 ausdrücken. Wiederum lässt sich der Abstand durch die Übertragungsleistung $P_{max}$ der zweiten sendenden Station $S_2$ und der empfangenden Signalintensität $C_0$ auf dem gewünschten Trägersignal C(t) ausdrücken:

$$\Delta C = \Delta C\left(transmission\_duration : \Delta t, velocity : v_{R1}, v_{S1}, dis\tan ce : r_0\right)$$

$$= \Delta C\left(\begin{array}{l} transmission\_duration : \Delta t, velocity : v_{R1}, v_{S1}, \\ transmission\_power : P_{\max}, received\_carrier : C_0 \end{array}\right). \quad (6)$$

Somit ergeben sich zwei Ansatzpunkte, die wahlweise oder in Kombination für eine Vermeidung von störenden Interferenzen bei der Vorgabe von Parametern für den Sendebetrieb berücksichtigbar sind. Nachfolgend werden diesbezüglich zwei kombinierbare Verfahren zur Optimierung der Planung beim Sendebetrieb in einem Ad-Hoc-Netz stellvertretend für andere Netztypen mit vergleichbarer Problematik beschrieben.

Bei den Überlegungen wird davon ausgegangen, dass die maximal mögliche Übertragungsdauer zwischen zwei Messzeitpunkten $T_0$ und $T_1$, also die Differenzzeit $\Delta t$ eine Funktion der Geschwindigkeit der beteiligten Stationen S1, R1, S2, R2, des Schwellenwertes der Trägererfassung $\Delta$, der Fehlerkorrekturfähigkeit der empfangenden Stationen R1, R2, des verwendeten Modulationsschemas, der erforderlichen Bitfehlerrate und der Empfangsleistung C(t) bzw. I (t) ist. Eine Harmonisierung aller Parameter wird benötigt, um ein stabiles Netz mit einem optimierten Datendurchsatz bereitzustellen.

Die Optimierung des sich daraus ergebenen Parametersatzes kann durch eine Anpassung des Empfängers realisiert werden, insbesondere durch eine Einführung einer adaptiven Trägerabtastung. Die Optimierung dieses Parametersatzes kann zusätzlich oder alternativ auch durch eine Anpassung des Parametersatzes für die Burst-Betriebsart beim Senden, also eine Burst-Betriebsart-Justierung bzw. -Anpassung durchgeführt werden. Besonders bevorzugt wird die Kombination dieser beiden Verfahrensweisen.

Unter der Annahme einer freien Raumdämpfung und der Verwendung isotropher Antennen kann der Signalverlust $\rho$ ausgedrückt werden durch

$$\rho[dB] = 32,44 + 20\log_{10}\left(r[km]\right) + 20\log_{10}\left(f_C[MHz]\right), \quad (7)$$

wobei r die Distanz zwischen dem ersten Sender $S_1$ und dem ersten Empfänger $R_1$ und wobei $f_c$ die Trägerfrequenz definiert. Unter Berücksichtigung einer Wellenausbreitung in einem nicht freien Raum ist der Signalverlust auf entsprechende Art und Weise zu berechnen. Selbiges gilt für die Verwendung nicht isotropher Antennen, beispielsweise bei der Verwendung von Sektorantennen mit einer Richtstrahlcharakteristik oder einer gerichteten Sendecharakteristik. Aus diesem Signalverlust $\rho$ (Formel 7) erfährt das gewünschte Empfangssignal bzw. Trägersignal C(t) des ersten Empfängers $R_1$ vom ersten Messzeitpunkt $T_0$ zum zweiten Messzeitpunkt $T_1$ bei einem gleichzeitigen Wegdriften von dem ersten Sender $S_1$ mit einer Differenzgeschwindigkeit $\Delta = (v_{S1} + v_{R1})$ einen Trägerverlust bzw. Verlust des gewünschten Empfangssignals $\Delta C$ von

$$\Delta C[dB] = -(C_1 - C_0) = 20\log_{10}\left(r_1 / r_0\right) = 20\log_{10}\left(1 + \frac{(v_{S1} + v_{R1})\Delta t}{r_0}\right). \quad (8)$$

Ein maximaler Interferenzanstieg $\Delta I$ unter Annahme eines Schlimmst-Fall-Szenarios eines Störers in Form der zweiten sendenden Station $S_2$ innerhalb des Erfassungsbereiches der ersten empfangenden Station R1 zum Zeitpunkt $T_0$ bei gleichzeitiger Annäherung der zweiten sendenden Station $S_2$ an die erste empfangende Station $R_1$ bis zu dem zweiten Zeitpunkt $T_1$ mit einer maximalen Geschwindigkeit von $v_{max}$ kann abgeleitet werden aus

$$\Delta I[dB] = I_1 - I_0 = 20\log_{10}\left(\frac{r_{\min}}{r_{\min} - (v_{\max} + v_{R1})\Delta t}\right) = 20\log_{10}\left(\frac{1}{1 - (v_{\max} + v_{R1})\Delta t / r_{\min}}\right), \quad (9)$$

wobei $r_{min}$ dem minimalen Abstand, also den Decodierbereich $r_D$ entspricht, welcher zwischen der zweiten sendenden

Station $S_2$ und der ersten empfangenden Station $R_1$ bestehen muss, um eine Störung unter üblichen Umständen zu vermeiden.

Andere Szenarien machen eine entsprechende Modifizierung der vorstehend genannten Gleichungen erforderlich, beispielsweise könnte die Abhängigkeit von $r^2$ mit Blick auf die Dämpfungsbedingungen im Umfeld durch $r^\alpha$ mit $\alpha = 2...4$ ersetzt werden. Auch ist der Einsatz von Nachschlagtabellen möglich, um spezielle Umgebungsbedingungen, Empfangsbedingungen oder Sendebedingungen zu berücksichtigen. Insbesondere für den Einsatz von Richtantennen und dergleichen sind derartige Nachschlagtabellen besonders vorteilhaft einsetzbar, um die entsprechenden Werte in den Formeln oder in angepassten Formeln jeweils den momentanen Bedingungen aktuell anpassen zu können. Zweckmäßig kann in diesem Zusammenhang auch eine Signalisierung zwischen den beteiligten sendenden und empfangenden Stationen sein, um den jeweils anderen Stationen die eigenen Stationsparameter und eventuelle Kenntnisse über spezielle Umgebungsparameter mitzuteilen, so dass in dem jeweiligen Umgebungsbereich einer Station auch weitere Stationen über die tatsächlichen Sende- bzw. Empfangsbedingungen informiert werden.

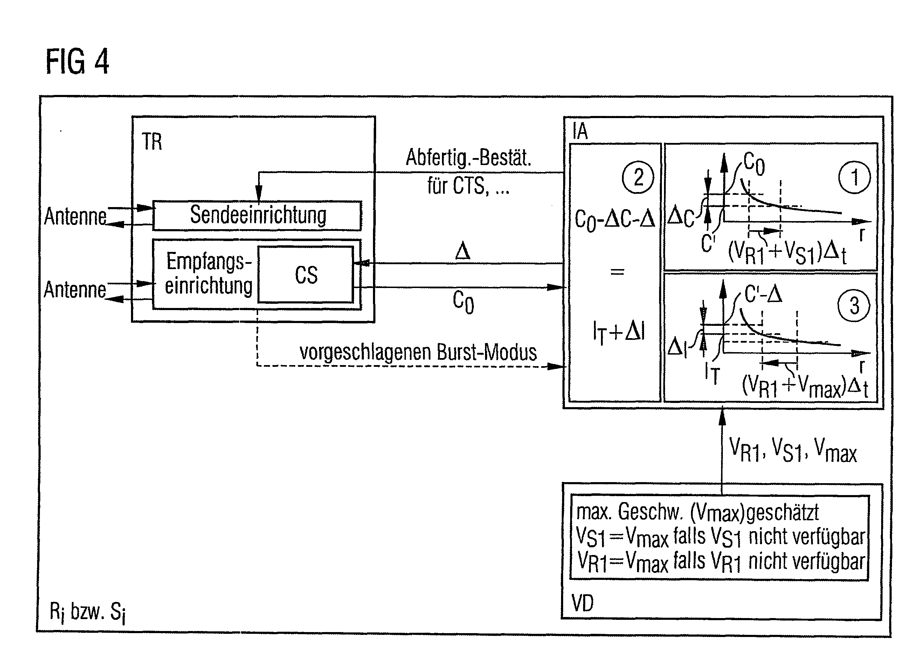

Allgemein lässt sich der Ansatz auf alle den Träger abtastenden Zugriffsmediums-Steuerschemata anpassen, bei denen eine Mobilität zu berücksichtigen ist. FIG 4 zeigt ausgewählte Komponenten einer Station $R_i$, $S_i$, welche in dem umstehend beschriebenen Verfahren als empfangende Station R1, R2, R3, und/oder sendende Station S1, S2, S3 eingesetzt werden kann. Dargestellt sind dabei nur einzelnen Komponenten, welche für das Verständnis der umstehend beschriebenen Verfahrensweise relevant sind.

In üblicher Art und Weise werden Eingangsdaten über eine Antenne empfangen und einer Empfangseinrichtung zugeführt. Zu versendende Daten werden von einer Sendeeinrichtung an diese oder eine andere Antenne ausgegeben. Sendeeinrichtung und Empfangseinrichtung sind üblicherweise Bestandteil einer Sende- und Empfangseinrichtung, welche als Transceiver TR bezeichnet wird. Diese Sende- und Empfangseinrichtung TR ist mit weiteren Einrichtungen, insbesondere einer nicht dargestellten Steuereinrichtung und einem Speicher für die zwischenzeitliche Datenspeicherung und Datenverarbeitung verbunden.

Die weiteren Komponenten, die beispielsweise als Softwaremodule oder Hardwaremodule eigenständig oder als Bestandteil der Steuereinrichtung ausgeführt sein können, dienen der Durchführung der beschriebenen Verfahrensweise. Eine Schwellen-Einstelleinrichtung IA zum Einstellen der Schwelle $I_T$ abhängig von der Zeit weist dabei drei Modulkomponenten auf, um die Differenzintensität sowie die weiteren erforderlichen Parameter zu bestimmen. Von dieser Schwellen-Einstelleinrichtung IA wird insbesondere eine Abfertigungsbestätigung, beispielsweise die Bereit-zum-Senden-Mitteilung CTS an die Sendeeinrichtung ausgegeben. Weiterhin wird die Schwelle $\Delta$ für die Trägerabtastung an eine Trägerabtastungseinrichtung CS ausgegeben, die vorzugsweise Bestandteil der Empfangseinrichtung ist. Von der Trägerabtasteinrichtung CS wird wiederum ein Trägerintensitätswert $C_0$ an die Schwellen-Einstelleinrichtung IA übergeben. Außerdem wird von der Empfangseinrichtung eine vorgeschlagene Burst-Betriebsart an die Schwellen-Einstelleinrichtung IA übergeben.

Ferner weist die Station als weiteres dieser Module eine Geschwindigkeitsbestimmungseinrichtung VD auf, welche aus verfügbaren Parametern die Geschwindigkeit einzelner Stationen zueinander bestimmt. Dazu empfängt die Geschwindigkeitsbestimmungseinrichtung VD insbesondere entsprechende Daten oder Signale der Empfangseinrichtung, der Trägerabtasteinrichtung CS und/oder Schwellen-Einstelleinrichtung IA. Umgekehrt gibt die Geschwindigkeitsbestimmungseinrichtung VD Geschwindigkeitswerte der empfangenden Station $v_{R1}$, der sendenden Station $v_{S1}$ und der Differenzgeschwindigkeit $v_{Max}$ an die anderen Einrichtungen, insbesondere an die Schwellen-Einstelleinrichtung IA.

Die Station $R_i$, $S_i$ ist somit in einen empfangenden und einen sendenden Teil aufgeteilt. Um die Trägerabtastung zu ermöglichen, wird die Signalstärke C(t), I(t) eines hereinkommenden Signals in der Empfängereinrichtung gemessen und mit Hilfe der Trägerabtasteinrichtung CS bestimmt. Falls die Signalstärke einen vorgegebenen Schwellenwert überschreitet, erlaubt die Einrichtung, das empfangene Signal C(t) durch die Empfangseinrichtung hindurchzulassen, um eine weitere Signal- und Datenverarbeitung zu ermöglichen. Ferner dient die Trägerabtasteinrichtung CS dazu, einen nicht benutzten bzw. "Idle" Kanal zu erkennen und für einen späteren Zugriff auf einen solchen erkannten Kanal zu reservieren.

Von Bedeutung ist dabei die Definition des Schwellenwertes $\Delta$ der Differenzintensität. Falls der Schwellenwert $\Delta$ zu empfindlich gewählt ist, kann die Wahrscheinlichkeit des Erfassens eines vermeintlichen deutlichen Störsignals I(t) zu hoch sein, und zwar selbst dann, wenn der Kanal tatsächlich die Übertragung im Fall geringer Geschwindigkeiten ermöglichen würde. Ein Zugriff auf den Kanal würde nicht erlaubt werden. Folglich würde das System bei einem zu empfindlichen Schwellenwert $\Delta$ mit Blick auf den optimalen Datendurchsatz deutlich verschlechtert. Falls umgekehrt der Schwellenwert $\Delta$ zu hoch gewählt ist, ist das System nicht empfindlich genug, um sich schnell nähernde Störer S2 zu erkennen, welche eine große Interferenz mit Blick auf den momentan übertragenen Burst bzw. die entsprechenden Datensignale einer Datenfolge erzeugen würden. Solche übertragenden Sendesignale C(t) würden dann zumindest teilweise gestört und in der Empfangsstation nicht mehr vollständig rekonstruierbar sein. Daher würde ein Datenverlust entstehen, was zu einer erforderlichen Neuübertragung der Daten bzw. Signale führen würde. Dies würde den Durchsatz des Systems ebenfalls verschlechtern. Daher wird vorzugsweise ein angepasster Algorithmus zum Auffinden eines optimalen Wertes für den Schwellenwert $\Delta$ gesucht.

Von Bedeutung ist dabei die Messung oder Abschätzung der diversen Geschwindigkeiten, welche auf die Übertragungsbedingungen einwirken. Diese Geschwindigkeiten werden für den Verfahrensablauf bzw. Algorithmus verwendet. Jede mobile Station kann die Geschwindigkeiten selber messen. Zusätzlich oder alternativ kann die Station die entsprechenden Informationen aus Verkehrsdiensten (Traffic Services) erhalten und beispielsweise über eine Funkschnittstelle von einer ortsfesten Station oder einer anderen mobilen Station übertragen bekommen. Generell ist eine Vielzahl von Geschwindigkeitsmessungen und Verfahren zur Geschwindigkeitsabschätzung für die praktische Umsetzung der Verfahrensweise verwendbar. Geschwindigkeitsmessungen einzelner mobiler Stationen oder von deren Kommunikationspartnern können auf einer eigenständigen Messung der eigenen Geschwindigkeit beruhen, können aus der Verteilung der "eigenen" Geschwindigkeit an andere mobile Stationen unter Verwendung der Kommunikationsmöglichkeiten über einen Funkkanal bestimmt werden oder alternativ auf Geschwindigkeitsmessungen beruhen, die ortsabhängig durchgeführt werden, wobei die Geschwindigkeit eines Fahrzeugs mit dem Vergleich der Position der mobilen Station zu verschiedenen Zeitpunkten durchgeführt wird, während die Position der mobilen Station aus entsprechenden Abschätzungen eines empfangenden GPS-Signals erhalten wird (GPS: Global Position System).

Die Abschätzung der maximalen Geschwindigkeit $v_{max}$, welche als Schlimmstfallparameter für die Verfahrensweise als sicherstes Kriterium einsetzbar ist, kann aus gemessenen oder empfangenden Werten bestimmt werden. Alternativ kann auch dafür eine Abschätzung einer Positionsangabe aufgrund eines GPS-Signals erfolgen. Beispielsweise können für einen Einsatz in städtischen Bereichen maximale Geschwindigkeiten $v_{max}$ von 50 km/h gewählt werden, für den Einsatz des Verfahrens im Bereich einer Autobahn jedoch maximale Geschwindigkeiten $v_{max}$ von 250 km/h eingesetzt werden.

Wie dies in dem Block der Schwellen-Einstelleinrichtung IA skizziert ist, besteht ein bevorzugter Algorithmus zur Anpassung des Schwellenwerts $\Delta$ aus drei Schritten, wobei die dargestellte Reihenfolge nicht zwingend in dieser Form erforderlich ist.

In einem ersten Schritt ① wird die gemessene Signalstärke des gewünschten Eingangssignals $C_0$ auf dem Träger durch eine Abschätzung des Signalverlustes $\Delta C$ reduziert. Der abgeschätzte Signalverlust $\Delta C$ kann aus der Geschwindigkeitsdifferenz $v_{S1} + v_{R1}$ zwischen der ersten sendenden Station S1 und der ersten empfangenden Station R1 sowie der gewünschten bzw. erforderlichen Übertragungszeit $\Delta t$ für die nächste Übertragung von Daten abgeschätzt werden, um anschließend den Wert des gemessenen Eingangssignals $C_0$ zum ersten Messzeitpunkt T0 abzuziehen.

Außerdem wird in einem zweiten Schritt ② die resultierende Signalstärke um den Schwellenwert $\Delta$ reduziert, wobei der Schwellenwert $\Delta$ durch die erforderliche Bitfehlerrate, die verwendete Modulation und das verwendete Codierungsschema sowie gegebenenfalls weitere relevante Größen dieser Art gebildet wird.

Der dritte Schritt ③ besteht darin, dass die resultierende Signalstärke um die maximal mögliche Interferenz zum Ende der gewünschten Übertragung, dass heißt zum Zeitpunkt T0 + $\Delta t$ reduziert wird, wobei bei der Berechnung der maximalen möglichen Interferenz von dem Auftreten bzw. Herannahen einer unbekannten Interferenzquelle wie der zweiten sendenden Station S2 ausgegangen wird. Die relative Geschwindigkeit der herannahenden Interferenzquelle bzw. zweiten sendenden Station S2 wird im sichersten Berechnungsfall als maximal möglich angesetzt, wobei die Geschwindigkeit der ersten empfangenden Station R1 als eine Referenzgeschwindigkeit angesetzt wird. Daher wird die relative Geschwindigkeit durch die Geschwindigkeit $v_{R1}$ der ersten empfangenden Station R1 erhöht um die maximal mögliche Geschwindigkeit einer interferierenden Station S2 angegeben. Ferner wird bei den Ansätzen zweckmäßigerweise davon ausgegangen, dass der Erfassungsbereich $r_R$ der ersten empfangenden Station R1 während der Bestimmung der Kanalbedingungen zum ersten Zeitpunkt T0 bereits die interferierende zweite sendende Station S2 erfasst hat.

Alternativ kann eine Berücksichtigung der Daten der zweiten sendenden Station S2 auch über Informationen durch andere Stationen per Rundfunkinformation oder dergleichen übermittelt werden, um berücksichtigt werden zu können, um auch möglicherweise interferierende Stationen berücksichtigen zu können, die sich noch nicht im Erfassungsbereich $r_R$ befinden. Das Ergebnis der Berechnung bestimmt eine obere Grenze für den Schwellenwert $\Delta$ des Kanalabtastungs-Algorithmus. Als Vorsichtsmaßnahme kann außerdem eine zusätzliche Sicherheitstoleranz von einigen dB bei der Festsetzung des Schwellenwertes $\Delta$ berücksichtigt werden.

Vorteilhafterweise kann der erste beschriebene Schritt ① weggelassen werden, falls die Bewegung der ersten empfangenden Station R1 und der ersten sendenden Station S1 innerhalb des Clusters CL1 gering ist oder zumindest relativ zueinander gering ist.

Die Messung des Wertes des gewünschten Empfangssignals C0 auf dem Träger kann weggelassen werden, falls die Position der ersten sendenden Station S1 und der ersten empfangenden Station R1 bekannt ist, zumindest relativ zueinander bekannt ist, so dass eine Abschätzung des Wertes des Empfangssignals C0 auf dem Träger möglich ist.

Um eine gute Abschätzung für den Schwellenwert $\Delta$ zu erreichen, werden einige Parameter der Burst-Betriebsart benötigt, z.B. die erforderliche Übertragungszeit, das verwendete Modulationsschema, die Sendeleistung etc. Diese Parameter sollten senderseitig definiert und zu der Empfängerseite übertragen werden, was beispielsweise in Verbindung mit der "Bereit-Zu-Senden-Mitteilung" RTS erfolgen kann. Falls eine solche Mitteilung nicht möglich oder verfügbar ist, sollten die Einflüsse durch derartige Parameter durch die erste empfangende Station R1 empfängerseitig abgeschätzt werden, wobei z.B. eine maximale Burstgröße als eine Abschätzung für die erforderliche Sendedauer $\Delta t$ ansetzbar ist.

Eine solche maximale Burstgröße kann entweder systemvorgegeben sein, wenn ein Burst zur Übertragung von einer maximal zulässigen Anzahl von Sendedaten zuzüglich Kopfabschnittsdaten verwendet werden darf oder sogar hinsichtlich seiner Größe auf eine vorgeschriebene Größe festgelegt ist.

Falls die Burst-Betriebsart-Anforderungen einerseits und die Geschwindigkeiten der betroffenen Stationen S1, R1, S2 andererseits einen Schwellenwert Δ erforderlich machen, der unter einen minimalen Wert fällt, welcher durch die entsprechenden Stationen R1, S1 realisierbar ist, kann eine erfolgreiche Übertragung der Daten bzw. des Datenburst nicht garantiert werden. Diese Information sollte von der Empfängerseite, dass heißt der ersten empfangenen Station R1 zur Senderseite, dass heißt der ersten sendenden Station S1 übermittelt werden. Für eine einfache Implementierung und Integration in einen existierenden Standard, z.B. dem Standard gemäß IEEE 802.11 sollte vorzugsweise von einer Übertragung der "Bereit-Zu-Senden-Mitteilung" CTS, mit welcher die erste empfangende Station R1 der ersten sendenden Station S2 die Empfangsbereitschaft signalisiert, in solchen Fällen abgesehen werden.

Vorteilhafterweise kann auch die Leistungssteuerung als ein Parameter berücksichtigt werden. Insbesondere Ad-hoc-Netze, welche ein Zugriffsschema verwenden, das auf einer Trägerabtastung beruht, sind sehr empfindlich bezüglich unkordinierter Leistungssteuerungs-Mechanismen. Eine Verbesserung der vorstehend erläuterten adaptiven Trägerabtastung würde Ad-hoc-Netze sogar in Hochgeschwindigkeitsumgebungen mit solch einem Leistungssteuerungsmechanismus stabilisieren. Nachfolgen wird die Differenz zwischen der maximalen und der tatsächlichen momentanen Übertragungsleistung als Leistungssteuerungs-Verstärkung $g_{S1}$ der korrespondierenden sendenden Station, vorliegend der zweiten sendenden Station S2 betrachtet. Falls die tatsächliche Sendeleistung auf einen minimalen Wert gesetzt wird, erreicht die Leistungssteuerungs-Verstärkung $g_{S1}$ ihren maximalen Wert $g_{max}$. Gleichung (3) sollte dann modifiziert werden zu

$$C_0 \geq I_0 + \Delta I + \Delta C + \Delta + g_{max} - g_{S1} \, . \qquad (10)$$

Falls die Leistungssteuerungs-Verstärkung $g_{S1}$ der ersten sendenden Station S1 bei der ersten empfangenden Station R1 nicht verfügbar ist, wird der Parameter für die Leistungssteuerungs-Verstärkung $g_{s1}$ in der vorstehender Gleichung (10) ignoriert bzw. gleich Null gesetzt.

Für eine Umsetzung einer derartigen adaptiven Trägerabtastung zur Verbesserung des Mediumzugriffs-Steuerschemas auf Basis der Trägerabtastung in Hochgeschwindigkeitsumgebungen, z.B. für Kommunikationen zwischen Fahrzeugen, ist eine Umsetzung insbesondere in den Standard IEEE 802.11 möglich. In diesem Fall sind keine Modifikationen des standardisierten Protokolls nötig. Erforderlich wäre sinnvollerweise, dass der Standard einstellbare Schwellenwerte Δ für eine Trägerabtastung zulässt bzw. nicht ausschließt. Die Übertragung von Burstbetriebsart-Parametern wäre nützlich aber nicht zwingend erforderlich.

Für eine sendende Station S1 ist es möglich, festzustellen, ob eine kommunizierende empfangende Station R1 die Verfahrensweise unterstützt, obwohl die Schwellenwertbestimmung für die Trägerabtastung eigentlich ein interner Parameter der empfangenden Station R1 ist. Eine sendende Station S1 mit einstellbarem Leistungsverstärker kann dazu einfache Messungen durchführen. Nach dem Aussenden einer Bereit-Zu-Senden-Mitteilung RTS kann eine Erfassung durch den Empfang des bestätigenden Bereit-Zu-Senden-Mitteilungssignals bestimmt werden.

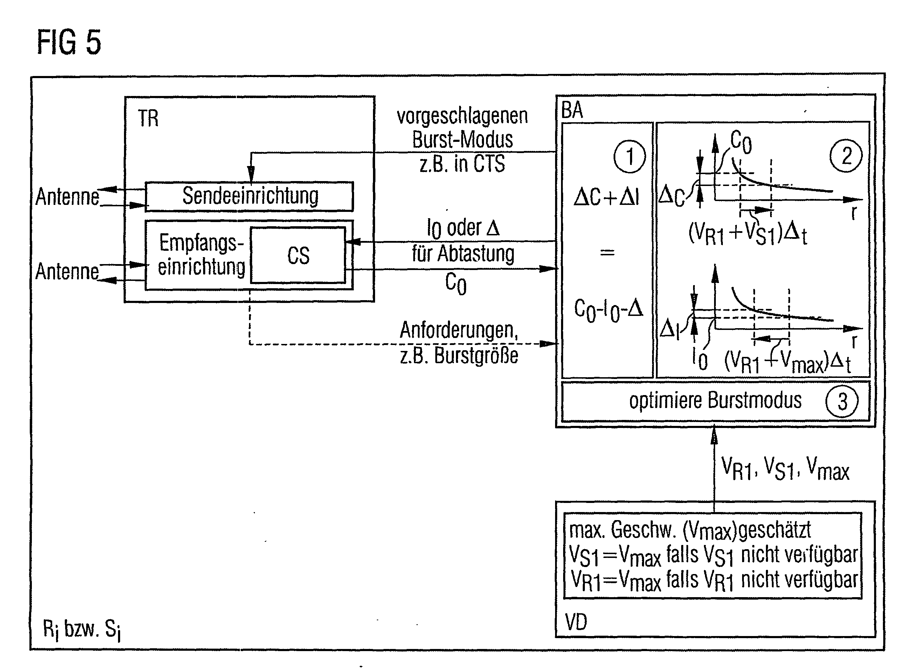

Die zweite mögliche Verfahrensweise besteht in der Burst-Betriebsart-Einstellung und wird anhand FIG 5 veranschaulicht. Zur Vereinfachung der Beschreibung werden nur Unterschiede zwischen FIG 5 und FIG 4 hervorgehoben. Für alle anderen baulichen und funktionellen Elemente gelten die Ausführungen zur FIG 4.

Für die Burst-Betriebsart-Einstellung wird eine Burst-Betriebsart-Einstellungseinrichtung BA anstelle der vorstehend beschriebenen Schwellen-Einstelleinrichtung IA verwendet. Entsprechend wird von der Burst-Betriebsart-Einstelleinrichtung BA anstelle der Abfertigungsbestätigung eine vorgeschlagene Burst-Betriebsart an die Sendeeinrichtung in der Sende- und Empfangseinrichtung TR übertragen. Diese Übertragung kann beispielsweise als Bestandteil der Bereit-zu-Senden-Mitteilung CTS erfolgen.

Anstelle einer Übertragung des Schwellenwertes Δ zu der Empfangseinrichtung in der Sende- und Empfangseinrichtung TR wird bei dieser Burst-Betriebsart-Einstellung die anfängliche Signalstärke bzw. Intensität I0 und/oder der Schwellenwert Δ von der Trägerabtasteinrichtung CS zur Burst-Betriebsart-Einstelleinrichtung BA übertragen. Außerdem werden von der Empfängereinrichtung in der Sende- und Empfangseinrichtung TR anstelle der vorgeschlagenen Burst-Betriebsart bzw. dem Burst-Modus nun Anforderungen wie z.B. die Burstgröße in Bit an die Burst-Betriebsart-Einstelleinrichtung BA übertragen.

In der Burst-Betriebsart-Einstelleinrichtung BA werden zusätzlich zu den verschiedenen Berechnungsschritten optimierte Burst-Betriebsarten bzw. Burst-Modi bestimmt.

Wie bereits bei der Verfahrensweise der adaptiven Trägerabtastung beschrieben, kann auch bei der Burst-Betriebsart-Einstellung eine Anpassung der Empfängereinrichtung, hier insbesondere der ersten empfangenden Station R1 vorgenommen werden. Alternativ zu der vorstehend beschriebenen Verfahrensweise wird hier jedoch eine Anpassung der Betriebsart für den übertragenen Burst vorgenommen. Da die Verfahrensweise sehr ähnlich zu der vorstehend beschriebenen ist, werden hier ebenfalls nur die Unterschiede hervorgehoben.

Der Schwellenwert $\Delta$ wird durch die Trägerabtasteinrichtung CS in der Sende- und Empfangseinrichtung TR vorbestimmt. Alternativ kann die zu dem ersten Messzeitpunkt T0 gemessene Signalstärke I0 von einem oder mehreren Störern, z.B. der zweiten sendenden Station S2 zu der Burst-Betriebsart-Einstelleinrichtung BA übertragen werden.

Die Anforderungen wie z.B. die Burstgröße in Bit sollten vorzugsweise von der Sendeeinrichtung zu dem Empfänger übertragen werden, also z.B. der ersten sendenden Station S1, welche Daten übertragen möchte, zu der ersten empfangenden Station R1, welche die Daten empfangen soll. Falls dies nicht möglich ist, können Standardwerte, welche dann zu nehmen sind, für den schlechtest denkbaren Fall, z.B. eine maximale Burstgröße eingesetzt werden.

Eine optimale Konfiguration des übertragenen Datenburst wird empfängerseitig definiert, dass heißt z.B. durch die Vorgabe der Burst-Dauer bzw. der verfügbaren Sendezeit $\Delta t$ und der Sendeleistung durch die erste empfangende Station R1. Die Konfiguration wird von der ersten empfangenden Station R1 zu der die Daten senden wollenden ersten sendenden Station S1 gesendet. Daher ist eine Modifikation des Protokolls bei einer Umsetzung in dem Standard IEEE 802.11 vorzunehmen.

Letztendlich wird eine Signalisierung von der ersten empfangenden Station R1 zur ersten sendenden Station S1 modifiziert, um die entsprechenden Daten bzw. Konfigurationen zu übertragen. Anhand der Zusammensetzung der derart empfangenden Daten kann die erste sendende Station S1 erkennen, dass die von ihr angesprochene erste empfangende Station R1 zur Durchführung des Verfahrens in der Lage ist.

Durch die beiden vorgeschlagenen Verfahrensweisen kann auch ein stabiler Betrieb bei Ad-hoc-Kommunikationen mit hoher Mobilität der einzelnen sendenden und empfangenden Stationen gewährleistet werden, wenn von diesen Medium-Zugriffs-Steuerschemata verwendet werden, die auf einer Trägerabtastung aufbauen. Aufgrund der zeitlichen Varianz mobiler Ad-hoc-Netze ist zwar die Einschätzung bzw. Untersuchung des Netzzustands zu einem ersten Zeitpunkt T0 nicht ausreichend, um eine Datenübertragung zu einem üblichen späteren Untersuchungszeitpunkt $T1 = T0 + \Delta t$ zu garantieren. Durch die Einführung der beiden Verfahren jeweils für sich genommen oder in Kombination werden jedoch auch die Zugriffsschemata mit Trägerabtastung in Hochgeschwindigkeitsumgebungen einsetzbar. Der Schwellenwert für die Trägerabtastung und die Parameter für die Datenburst-Einstellung, z.B. Sendeleistung, Sendezeitpunkt, Sendedauer, Modulationsschemata etc. werden in Abhängigkeit von der gemessenen Geschwindigkeit zwischen den einzelnen Stationen in dem Funksystem bestimmt. Daher können auch in dem System maximal mögliche auftretende Geschwindigkeiten berücksichtigt werden, um entsprechend die Sendeparameter so anzupassen, dass Kollisionen durch schnell auftauchende Stationen ausgeschlossen werden können.

**Patentansprüche**

1. Verfahren zum Übertragen einer Datenfolge in einem Funk-Kommunikationssystem, bei dem

    - eine erste sendende Station (S1) ein Sendesignal (C(t)) zum Übertragen der Datenfolge an eine erste empfangende Station (R1) über eine Funk-Schnittstelle (V) generiert,
    - vor der Übertragung durch zumindest die erste sendende Station (S1) und die erste empfangende Station (R1) die Funk-Schnittstelle hinsichtlich eines Störsignals (I(t)) einer Störquelle (S2) überprüft wird,

    dadurch **gekennzeichet**, dass

    - eine Annäherung der Störquelle (S2) relativ zu der ersten empfangenden Station (R1) festgestellt wird, und
    - die Übertragung zu einem Zeitpunkt (T0) nur begonnen wird, wenn in einer für die Übertragung der Datenfolge erforderlichen Zeitdauer ($\Delta t$) eine Annäherung der Störquelle (S2) an die erste empfangende Station (R1) nur bis zu einem die Übertragung durch das Störsignal (I(t)) nicht störenden Maß ($\Delta$) möglich ist.

2. Verfahren nach Anspruch 1, bei dem
eine erwartete Änderung, insbesondere Zunahme der Intensität des Störsignals ($\Delta I = I_1 - I_0$), bei der ersten empfangenden Station (R1) anhand der tatsächlichen und/oder maximal möglichen Relativgeschwindigkeit ($\Delta v = v_{S1} + v_{R1}$; $\Delta v = v_{S2max} + v_{R1}$) der Störquelle (S2) und der ersten empfangenden Station (R1) zueinander bestimmt oder abgeschätzt wird.

3. Verfahren nach Anspruch 1 oder 2, bei dem
eine erwartete Änderung, insbesondere Abnahme der Intensität des Sendesignals ($\Delta C = C_1 - C_0$) bei der ersten empfangenden Station (R1) abhängig von einer tatsächlichen und/oder maximal möglichen Relativgeschwindigkeit

($\Delta v_C = v_{S1} + v_{R1}$) der ersten sendenden Station (S1) und der ersten empfangenden Station (R1) zueinander bestimmt oder abgeschätzt wird.

4. Verfahren nach Anspruch 2, oder 3, bei dem für die Stationen (S1, R1, S3, R3) und Störquellen (S2) innerhalb eines Erfassungsbereichs ($r_R$) der ersten empfangenden Station (R1) deren jeweils bestimmbaren oder übermittelten Geschwindigkeiten ($v_{S1}$, $v_{R1}$, $v_{S2}$) verwendet werden, wobei eine übliche Störquelle (S2) innerhalb des Erfassungsbereichs ($r_R$) insbesondere durch die erste empfangende Station (R1) als Störquelle ermittelbar ist.

5. Verfahren nach einem der Ansprüche 2 bis 4, bei dem

- für die Stationen (S1, R1, S3, R3) und Störquellen (S2) innerhalb eines Erfassungsbereichs ($r_R$) der ersten empfangenden Station (R1) ohne eine diesbezügliche Geschwindigkeitsinformation und/oder
- für die Stationen (S1, R1, S3, R3) und Störquellen (S2) außerhalb eines Erfassungsbereichs ($r_R$) der ersten empfangenden Station (R1) ohne eine diesbezügliche Geschwindigkeitsinformation
- eine üblicherweise maximal mögliche oder maximal sinnvolle Geschwindigkeit ($v_{S2max}$) verwendet wird.

6. Verfahren nach einem der Ansprüche 2 bis 5, bei dem mit der erwarteten Änderung der Intensität des Störsignals ($\Delta I$) und/oder der erwarteten Änderung der Intensität des Sendesignals ($\Delta C$) die maximal verfügbare Zeitdauer ($\Delta t$) für die nicht gestörte Übertragung der Datenfolge bestimmt wird.

7. Verfahren nach einem der vorstehenden Ansprüche, bei dem ein Schwellenwert ($\Delta C$ (t) -I(t)) für eine minimale erforderliche Differenz der Intensität des Sendesignals (C(t)) zu der Intensität des Störsignals (I(t)) als das Maß für ein das Sendesignal (C(t)) nicht störendes Signal (I(t)) bestimmt und/oder abgeschätzt wird.

8. Verfahren nach einem der vorstehenden Ansprüche, bei dem ein Decodierbereich ($r_D$) um die erste empfangende Station (R1) festgelegt wird, wobei das Störsignal (I1) der innerhalb des Decodierbereichs ($r_D$) befindlichen Störquelle (S2) unzulässig stört.

9. Verfahren nach einem der vorstehenden Ansprüche, bei dem zwischen der ersten empfangenden Station (R1) und der ersten sendenden Station (S2) stationsbezogene und/oder stationsermittelte Parameter ($v_{S1}$, $v_{R1}$, $I_0$, $C_0$) und/ oder auf Übertragungsbedingungen bezogene Parameter, insbesondere ein Schwellenwert ($\Delta$) und/oder eine ma- ximal mögliche Übertragungsdauer ($\Delta t$) ausgetauscht werden.

10. Sende- und/oder Empfangsstation (S1, R1) eines Funk-Kommunikationssystems mit mobilen Sende- und Empfangsstationen (S1, R1) und mobilen Störquellen (S2), insbesondere einer zweiten sendenden Station (S2) als mobiler Störquelle, mit

- einer Geschwindigkeits-Bestimmungseinrichtung (VD) zum Bestimmen von Geschwindigkeiten und/oder Relativgeschwindigkeiten der Stationen und Störquelle zueinander,
- einer Trägerzustandsbestimmungseinrichtung, insbesondere Trägerabtasteinrichtung (CS) zum Bestimmen oder Ermitteln eines ungestörten Trägers für eine beabsichtigte Übertragung einer Datenfolge, und **gekennzeichnet durch**
- eine Schwellen-Bestimmungseinrichtung (IA) zum Bestimmen eines Schwellenwertes ($\Delta$) für eine minimale Differenz zwischen einem gewünschten Empfangssignal (C(t)) und einem Störsignal (I(t)), und
- eine Übertragungsdauer-Einstelleinrichtung (BA) zum Vorgeben einer maximal möglichen Übertragungsdauer ($\Delta t$) für eine Übertragung einer Datenfolge.

**Claims**

1. Method for transmitting a data sequence in a radio communication system, in which

- a first transmitting station (S1) generates a transmission signal (C(t)) for transmitting the data sequence to a first receiving station (R1) via a radio interface (V),
- the transmission is preceded by at least the first transmitting station (S1) and the first receiving station (R1) checking the radio interface for an interference signal (I(t)) from an interference source (S2),

**characterized in that**

- an approach by the interference source (S2) relative to the first receiving station (R1) is established, and
- the transmission is started at a time (T0) only if, in a period of time ($\Delta t$) which is required for transmitting the data sequence, it is possible for the interference source (S2) to approach the first receiving station (R1) only to an extent ($\Delta$) which does not interfere with the transmission by virtue of the interference signal (I(t)).

2. Method according to Claim 1, in which an expected change, particularly an increase in the intensity of the interference signal ($\Delta I = I_1 - I_0$), is determined or estimated on the first receiving station (R1) from the actual and/or maximum possible relative speed ($\Delta v = v_{S1} + v_{R1}$; $\Delta v = V_{S2max} + V_{R1}$) of the interference source (S2) and the first receiving station (R1) relative to one another.

3. Method according to Claim 1 or 2, in which an expected change, particularly a decrease in the intensity of the transmission signal ($\Delta C = C1 - C0$), is determined or estimated on the first receiving station (R1) on the basis of an actual and/or maximum possible relative speed ($\Delta v_c = v_{S1} + v_{R1}$;) of the first transmitting station (S1) and the first receiving station (R1) relative to one another.

4. Method according to Claim 2 or 3, in which for the stations (S1, R1, S3, R3) and interference sources (S2) within a capture range ($r_R$) of the first receiving station (R1) the respective determinable or transmitted speeds ($v_{S1}$, $v_{R1}$, $v_{S2}$) thereof are used, wherein a customary interference source (S2) within the capture range ($r_R$) can be ascertained as an interference source particularly by the first receiving station (R1).

5. Method according to one of Claims 2 to 4, in which

- for the stations (S1, R1, S3, R3) and interference sources (S2) within a capture range ($r_R$) of the first receiving station (R1) without a piece of speed information in this regard and/or
- for the stations (S1, R1, S3, R3) and interference sources (S2) outside a capture range ($r_R$) of the first receiving station (R1) without a piece of speed information in this regard
- a customarily maximum possible or maximum useful speed ($v_{S2max}$) is used.

6. Method according to one of Claims 2 to 5, in which

- the expected change in the intensity of the interference signal ($\Delta I$) and/or the expected change in the intensity of the transmission signal ($\Delta C$) is/are used to determine the maximum available period of time ($\Delta t$) for transmitting the data sequence without interference.

7. Method according to one of the preceding claims, in which a threshold value ($\Delta C$ (t) - I(t)) for a minimum required difference in the intensity of the transmission signal (C(t)) relative to the intensity of the interference signal (I(t)) is determined and/or estimated as the measure of a signal (I(t)) which does not interfere with the transmission signal (C(t)).

8. Method according to one of the preceding claims, in which a decoding area ($r_D$) around the first receiving station (R1) is stipulated, wherein the interference signal (I1) from the interference source (S2) situated within the decoding area ($r_D$) produces inadmissible interference.

9. Method according to one of the preceding claims, in which the first receiving station (R1) and the first transmitting station (S2) interchange station-related and/or station-ascertained parameters ($v_{S1}$, $v_{R1}$, $I_0$, $C_0$) and/or parameters related to transmission conditions, particularly a threshold value ($\Delta$) and/or a maximum possible transmission period ($\Delta t$).

10. Transmission and/or reception station (S1, R1) in a radio communication system with mobile transmission and reception stations (S1, R1) and mobile interference sources (S2), particularly a second transmitting station (S2) as a mobile interference source, having

- a speed determination device (VD) for determining speeds and/or relative speeds of the stations and interference source relative to one another,
- a carrier state determination device, particularly a carrier scanning device (CS), for determining or ascertaining a carrier without interference for an intended transmission of a data sequence, and

**characterized by**

- a threshold determination device (IA) for determining a threshold value ($\Delta$) for a minimum difference between a desired received signal (C(t)) and an interference signal (I(t)), and
- a transmission period adjustment device (BA) for prescribing a maximum possible transmission period ($\Delta t$) for transmitting a data sequence.

**Revendications**

1. Procédé pour transmettre une suite de données dans un système de radiocommunication, dans lequel :

   - une première station émettrice (S1) génère un signal d'émission (C(t)) pour transmettre la suite de données à une première station réceptrice (R1) via une interface radio (V) ;
   - avant la transmission, l'interface radio est contrôlée par au moins la première station émettrice (S1) et la première station réceptrice (R1) quant à la présence d'un signal parasite (I(t)) d'une source de perturbation (S2) ;

   **caractérisé en ce que** :

   - un rapprochement de la source de perturbation (S2) par rapport à la première station réceptrice (R1) est constaté et
   - la transmission à un instant (T0) ne commence que si, dans une durée de temps ($\Delta t$) requise pour la transmission de la suite de données, un rapprochement de la source de perturbation (S2) par rapport à la première station réceptrice (R1) n'est possible que jusque dans une mesure ($\Delta$) qui ne perturbe pas la transmission du fait du signal de perturbation (I(t)).

2. Procédé selon la revendication 1, dans lequel une modification attendue, en particulier une augmentation de l'intensité du signal parasite ($\Delta I = I_1 - I_0$), est déterminée ou estimée au niveau de la première station réceptrice (R1) à l'aide de la vitesse relative effective et/ou maximale possible ($\Delta v = v_{S1} + v_{R1}$ ; $\Delta v = v_{S2max} + v_{R1}$) de la source de perturbation (S2) et de la première station réceptrice (R1) l'une par rapport à l'autre.

3. Procédé selon la revendication 1 ou 2, dans lequel une modification attendue, en particulier une diminution de l'intensité du signal d'émission ($\Delta C = C1 - C0$), est déterminée ou estimée au niveau de la première station réceptrice (R1) en fonction d'une vitesse relative effective et/ou maximale possible ($\Delta v_C = v_{S1} + v_{R1}$) de la première station émettrice (S1) et de la première station réceptrice (R1) l'une par rapport à l'autre.

4. Procédé selon la revendication 2 ou 3, dans lequel sont utilisées, pour les stations (S1, R1, S3, R3) et les sources de perturbation (S2), dans les limites d'une zone de détection ($r_R$) de la première station réceptrice (R1), les vitesses respectivement déterminables ou communiquées ($v_{S1}$, $v_{R1}$, $v_{S2}$) de celles-ci, une source de perturbation habituelle (S2) pouvant, dans les limites de la zone de détection ($r_R$), être déterminée en tant que source de perturbation en particulier par la première station réceptrice (R1).

5. Procédé selon l'une des revendications 2 à 4, dans lequel est utilisée une vitesse habituellement maximale possible ou maximale pertinente ($v_{S2max}$) pour les stations (S1, R1, S3, R3) et les sources de perturbation (S2) dans les limites d'une zone de détection ($r_R$) de la première station réceptrice (R1) sans information sur la vitesse y relative et/ou pour les stations (S1, R1, S3, R3) et les sources de perturbation (S2) en dehors d'une zone de détection ($r_R$) de la première station réceptrice (R1) sans information sur la vitesse y relative.

6. Procédé selon l'une des revendications 2 à 5, dans lequel est déterminée, avec la modification attendue de l'intensité du signal parasite ($\Delta I$) et/ou la modification attendue de l'intensité du signal d'émission ($\Delta C$), la durée de temps maximale disponible ($\Delta t$) pour la transmission non perturbée de la suite de données.

7. Procédé selon l'une des revendications précédentes, dans lequel une valeur seuil ($\Delta C(t) - I(t)$) pour une différence minimale requise entre l'intensité du signal d'émission (C(t)) et l'intensité du signal parasite (I(t)) est déterminée et/ou estimée en tant que mesure d'un signal (I(t)) qui ne perturbe pas le signal d'émission (C(t)).

8. Procédé selon l'une des revendications précédentes, dans lequel une zone de décodage ($r_D$) est déterminée autour de la première station réceptrice (R1), le signal parasite (I1) de la source de perturbation (S2) qui se trouve dans les limites de la zone de décodage ($r_D$) perturbant de manière inadmissible.

9. Procédé selon l'une des revendications précédentes, dans lequel sont échangés, entre la première station réceptrice (R1) et la première station émettrice (S2), des paramètres relatifs aux stations et/ou déterminés par les stations ($v_{S1}$, $v_{R1}$, $I_0$, $C_0$) et/ou des paramètres relatifs à des conditions de transmission, en particulier une valeur seuil ($\Delta$) et/ou une durée de transmission maximale possible ($\Delta t$).

10. Station émettrice et/ou réceptrice (S1, R1) d'un système de radiocommunication avec des stations émettrices et réceptrices mobiles (S1, R1) et des sources de perturbation mobiles (S2), en particulier une deuxième station émettrice (S2) en tant que source de perturbation mobile, avec :

    - un dispositif de détermination de la vitesse (VD) pour déterminer des vitesses et/ou des vitesses relatives des stations et de la source de perturbation les unes par rapport aux autres ;
    - un dispositif de détermination de l'état de porteuses, en particulier un dispositif d'échantillonnage de porteuses (CS) pour déterminer ou établir une porteuse non perturbée pour une transmission envisagée d'une suite de données ;

**caractérisée par**

    - un dispositif de détermination de seuils (IA) pour déterminer une valeur seuil ($\Delta$) pour une différence minimale entre un signal de réception souhaité (C(t)) et un signal parasite (I(t)) et
    - un dispositif de réglage de la durée de transmission (BA) pour prescrire une durée de transmission maximale possible ($\Delta t$) pour une transmission d'une suite de données.

# FIG 1

Einander annähernde Cluster

$V_1$        $V_2$

$R_1$   $S_1$   CL1   V

$S_2$   $R_2$   V   CL2

Zeit $T_0$      Erfassungsbereich $r_0$ von $R_1$

$S_3$

$R_3$

$R_1$   $I(r_0)=I_0$   $S_2$

$S_1$   $R_2$

$X_0$

$\Delta x = (v_1 + v_2)\underbrace{(T_1 - T_0)}_{\Delta t}$

Zeit $T_1$   x1

$R_1$   $I$   $S_2$

$S_1$   $C$   $R_2$

Stör-bzw. Decodierbereich $r_D$ von $R_1$

EP 1 532 761 B1

## FIG 2

Kollision

$S_1$:RTS      $S_1$ Daten

$S_1$-Übertragung

$R_1$:CTS

$R_1$-Übertragung

$S_2$:RTS      $S_2$ Daten

$S_2$-Übertragung

$R_2$:CTS

$R_2$-Übertragung

$T_0$      $T_1$      Zeit t

## FIG 3

Eingangssignalstärke in $R_1$

$C_0$      $C(t)$      $C_1$

$\Delta C$

$\Delta$

$\Delta I$

$I_1$

$I_0 = I_{min}$      $\Delta t$      $I(t)$

$T_0$      $T_1$      Zeit t

18

# FIG 4

## FIG 5

EP 1 532 761 B1

**TR**

Antenne

Sendeeinrichtung

Antenne

Empfangseinrichtung   CS

vorgeschlagenen
Burst-Modus
z.B. in CTS

$I_0$ oder $\Delta$
für Abtastung
$C_0$

Anforderungen,
z.B. Burstgröße

**BA**

①

$\Delta C + \Delta I$

$=$

$C_0 - I_0 - \Delta$

②

$C_0$

$\Delta C$

$r$

$(V_{R1} + V_{S1})\Delta t$

$\Delta I$

$I_0$   $(V_{R1} + V_{max})\Delta t$

$r$

optimiere Burstmodus   ③

$V_{R1}, V_{S1}, V_{max}$

max. Geschw. $(V_{max})$geschätzt
$V_{S1} = V_{max}$ falls $V_{S1}$ nicht verfügbar
$V_{R1} = V_{max}$ falls $V_{R1}$ nicht verfügbar

**VD**

$R_i$ bzw. $S_i$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2002044614 A